# EUROPEAN PATENT SPECIFICATION

(11) **EP 2 991 943 B1**
(45) Date of publication and mention of the grant of the patent: **17.11.2021**
(21) Application number: 14792204.1
(22) Date of filing: 02.05.2014
(51) Int. Cl.: C03C 17/00, E06B 3/66

(54) **WINDOW**
FENSTER
FENÊTRE

(30) Priority: 03.05.2013 FI 20135454
(43) Date of publication of application: 09.03.2016
(73) Proprietor: Lammin Ikkuna Oy, 16900 Lammi (FI)
(72) Inventor: SAARINEN, Hannu, 18300 Heinola (FI)
(74) Representative: Papula Oy
(86) International application number: PCT/FI2014/050323
(87) International publication number: WO 2014/177772

(56) References cited:
- FI-A- 20 125 154
- FI-U1- 9 961
- US-A1- 2003 080 909
- US-A1- 2004 113 860
- US-A1- 2004 200 821
- B. WIDENBERG ET AL: "Desing of Energy Saving Windows with High Tranmission at 900 Mhz and 1800 Mhz", DEPARTMENT OF ELECTROSCIENCE, ELECTROMAGNETIC THEORY CODEN:LUTEDX/(TEAT-7110)/1-14/(2002), 28 August 2002 (2002-08-28), pages 1-14, XP55080784,
- None

## Description

The object of the invention is window as defined in the preamble of claim 1, which comprises at least two selective glass panes coated with a selective film.

Selective glasses are used in windows for improving the energy efficiency of buildings. Selective glass panes comprise a thin metal or metal-oxide film, which is electrically conductive. Shortwave thermal radiation from the sun and visible light pass through selective glass fine, but long-wave thermal radiation trying to pass from inside to outside reflects from the film back into the room.

The problem in windows provided with selective glass panes is that the coating of selective glasses damps the passage of radio waves, which is detrimental, because e.g. the audibility of mobile phones inside a building deteriorates or may be lost altogether owing to the selective glass. For improving the penetration of radio waves, the selective glass panes are provided with uncoated areas, through which radio waves can pass inside of a building. If the square area of the uncoated area is large, thermal insulation capacity may be impaired essentially.

Publication B. WIDENBERG ET AL: "Design of Energy Saving Windows with High Transmission at 900 Mhz and 1800 Mhz", DEPARTMENT OF ELECTROSCIENCE, ELECTROMAGNETIC THEORY COD EN: LUTEDX/(TEAT-7110)/1-14/(2002), 28 August 2002 (2002-08-28), pages 1-14, XP55080784 discloses a window consisting of two glass panes one of which is coated with selective film having slits.

The aim of this invention is to achieve a window provided with selective glass panes with high thermal insulation capacity and penetration ability of radio waves.

### Brief description of the invention

The window according to the invention comprises at least two selective glass panes coated with a selective film. Selective glass panes are provided with an uncoated area for improving the penetration of radio waves. In one selective glass pane the uncoated area is lattice-shaped and in other selective glass panes the uncoated area is at the same point as the lattice-shaped uncoated area and of the same form as the area defined by the lattice-shaped uncoated area.

A significant advantage of the solution according to the invention is that by the lattice-shaped uncoated area it is possible to achieve a minor damping of radio waves and at the same time the square area of the uncoated area can be kept small. Thus the thermal insulation capacity and surface temperature of selective glass do not essentially lower due to the impact of the uncoated area, whereby condensate phenomenon and draft and draught phenomena effecting on housing comfort are insignificant, and the energy economics of the building does not weaken essentially.

### Brief description of the figures

In the following, the invention will be described in more detail by the aid of an embodiment with reference to the attached drawings, wherein
Fig. 1 presents a cross-section of a window comprising two consecutively arranged selective glass panes.
Fig. 2 presents a front view of selective glass of window of Fig. 1, which comprises a lattice-shaped, uncoated area.
Fig. 3 presents a front view of selective glass of window of Fig. 1, in which the uncoated area is of the same size and form as the area defined by the lattice-shaped, uncoated area of the selective glass of Fig. 2.

### Detailed description of the invention

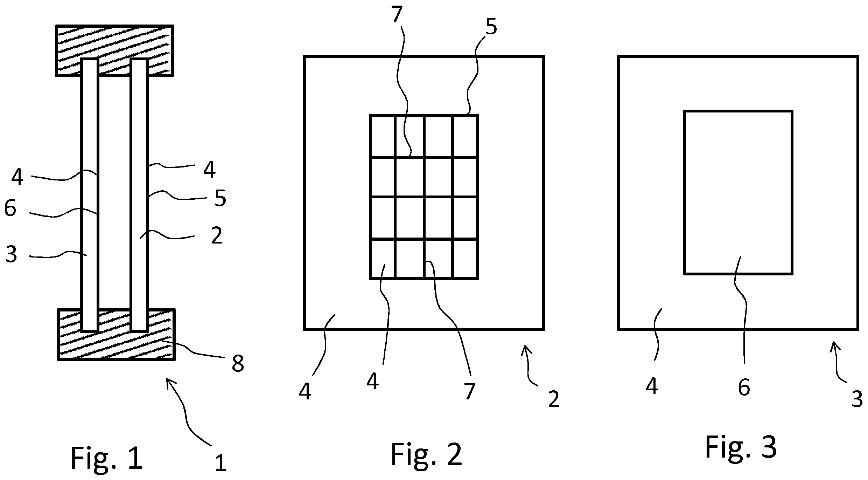

Fig. 1 presents a window 1, e.g. a window of a building. The building can be e.g. a residential building, vacation home, office building, commercial building or industrial building. Window 1 comprises at least two selective glass panes 2, 3 coated with a selective film 4. Typically the window 1 comprises 2-4, or even more than four consecutively arranged glass panes, of which at least two are coated with a selective film 4. All the glasses of the window can be selective glasses. The glass panes 2, 3 are arranged to the window frame 8.

The selective film 4 is a thin metal or metal-oxide film, which is electrically conductive. The selective film 4 lets visible light through well, but it blocks the passage of other wavelengths, such as radio waves, through the window structure. The thickness of the selective film 4 is typically 5-100 nm. The coating can be either a hard or a soft coating. A hard coated selective glass can be used as a separate glass. A soft coated selective glass is used so that the coated side is towards the gas space between two glass panes.

There is an uncoated area 5, 6 in the selective glass panes 2, 3 for improving the penetration of radio waves. The uncoated area 5, 6 is formed on the selective glass pane 2, 3 on the surface coated with a selective film 4. In the uncoated area 5, 6, the selective film 4 has been removed e.g. by grinding or in some other way. In one selective glass pane 2 of the window 1, the uncoated area 5 is lattice-shaped or lattice-formed. Typically, only in one selective glass pane 2 the uncoated area 5 is lattice-shaped. In other selective glass panes 3 the uncoated area 6 is at the same point in horizontal and/or vertical direction as the lattice-shaped uncoated area 5.

The selective film 4 and the lattice-shaped, uncoated area 5 formed on the selective film 4, is formed on the outermost selective glass pane, which is intended to be a façade of a building. According to one embodiment of invention the lattice-shaped, uncoated area 5 is formed on the innermost selective glass pane of the window, i.e. on the selective glass pane nearest to the interior of the building, when the window has been installed in place. The selective film 4 and the lattice-shaped uncoated area 5 can be on the outer surface or on the inner surface of the selective glass pane.

The lattice-shaped, uncoated area 5 is formed from the uncoated elements 7 arranged adjacent to each other and/or one on the other.

The adjacent, uncoated elements 7 are parallel. The uncoated elements 7 one on the other are parallel. The width of the uncoated elements 7 is up to 5 mm, typically 0,1-5 mm. The combined area of the uncoated elements 7 is not more than 30 %, typically 1-30 % of the area defined by the lattice-shaped, uncoated area 5.

In other selective glass panes 3 the uncoated area 6 is of the same form as the area defined by the lattice-shaped, uncoated area 5. In other selective glass panes 3 the uncoated area 6 is of the same size as the area defined by the lattice-shaped, uncoated area 5. Typically, the area defined by the lattice-shaped, uncoated area 5 is of square shape or of rectangular (in Fig. 2) shape. Then in other selective glass panes 3 the uncoated area 6 is also of square shape or of rectangular shape. In other selective glass panes 3 the selective film 4 and the uncoated area 6 formed on it can be on the outer surface or on the inner surface of the glass pane. In other selective glass panes 3 the coating has been totally removed from the uncoated area 6.

## Claims

1. Window (1) comprising at least two selective glass panes (2, 3) coated with a selective film (4), and which selective glass panes (2, 3) comprise an uncoated area (5, 6) for improving the penetration of radio waves, **characterized in that** in one selective glass pane (2) the uncoated area (5) is lattice-shaped and in other selective glass panes (3) the uncoated area (6) is at the same point as the lattice-shaped uncoated area (5) and of the same form as the area defined by the lattice-shaped, uncoated area (5).

2. Window (1) according to claim 1, **characterized in that** in other selective glass panes (3) the uncoated area (6) is of the same size as the area defined by the lattice-shaped, uncoated area (5).

3. Window (1) according to claim 1 or 2, **characterized in that** the area defined by the lattice-shaped, uncoated area (5) is of quadrat shape or of rectangular shape.

4. Window (1) according to any one of the preceding claim 1-3, **characterized in that** in other selective glass panes (3) the uncoated area (6) is of square shape or of rectangular shape.

5. Window (1) according to claim 1, **characterized in that** the lattice-shaped, uncoated area (5) is formed on the outermost selective glass pane, which is intended to be a façade.

6. Window (1) according to claim 1, **characterized in that** the lattice-shaped, uncoated area (5) is formed on the innermost selective glass pane.

7. Window (1) according to claim 1, **characterized in that** the lattice-shaped, uncoated area (5) is formed from uncoated elements (7), the width of which is up to 5 mm.

8. Window (1) according to claim 1 or 7, **characterized in that** the lattice-shaped, uncoated area (5) is formed from uncoated elements (7), the combined area of which is not more than 30 % of the area defined by the lattice-shaped, uncoated area (5).

## Patentansprüche

1. Fenster (1), umfassend zumindest zwei selektive Glasscheiben (2, 3), die mit einer selektiven Folie (4) beschichtet sind, und wobei die selektiven Glasscheiben (2, 3) ein unbeschichtetes Gebiet (5, 6) zum Verbessern des Eindringens von Funkwellen umfassen, **dadurch gekennzeichnet, dass** in einer selektiven Glasscheibe (2) das unbeschichtete Gebiet (5) gitterförmig ist und in einer anderen selektiven Glasscheibe (3) das unbeschichtete Gebiet (6) an demselben Punkt ist, wie das gitterförmige unbeschichtete Gebiet (5), und von derselben Gestalt ist, wie das Gebiet, das durch das gitterförmige, unbeschichtete Gebiet (5) definiert ist.

2. Fenster (1) nach Anspruch 1, **dadurch gekennzeichnet, dass** in anderen selektiven Glasscheiben (3) das unbeschichtete Gebiet (6) von derselben Größe ist, wie das Gebiet, das durch das gitterförmige, unbeschichtete Gebiet (5) definiert ist.

3. Fenster (1) nach Anspruch 1 oder 2, **dadurch gekennzeichnet, dass** das Gebiet, das durch das gitterförmige, unbeschichtete Gebiet (5) definiert ist, von einer quadratischen Gestalt oder einer rechteckigen Gestalt ist.

4. Fenster (1) nach einem der vorhergehenden Ansprüche 1 bis 3, **dadurch gekennzeichnet, dass** in anderen selektiven Glasscheiben (3) das unbeschichtete Gebiet (6) von einer quadratischen Gestalt oder einer rechteckigen Gestalt ist.

5. Fenster (1) nach Anspruch 1, **dadurch gekennzeichnet, dass** das gitterförmige, unbeschichtete Gebiet (5) auf der äußersten selektiven Glasscheibe gebildet ist, die angedacht ist, eine Fassade zu sein.

6. Fenster (1) nach Anspruch 1, **dadurch gekennzeichnet, dass** das gitterförmige, unbeschichtete Gebiet (5) auf der innersten selektiven Glasscheibe gebildet ist.

7. Fenster (1) nach Anspruch 1, **dadurch gekennzeichnet, dass** das gitterförmige, unbeschichtete Gebiet (5) aus unbeschichteten Elementen (7) gebildet ist, deren Breite bis zu 5 mm beträgt.

8. Fenster (1) nach Anspruch 1 oder 7, **dadurch gekennzeichnet, dass** das gitterförmige, unbeschichtete Gebiet (5) aus unbeschichteten Elementen (7) gebildet ist, deren kombiniertes Gebiet nicht mehr als 30% des Gebiets beträgt, das durch das gitterförmige, unbeschichtete Gebiet (5) definiert ist.

## Revendications

1. Fenêtre (1) comprenant au moins deux carreaux de verre sélectifs (2, 3) revêtus d'un film sélectif (4), et lesdits carreaux de verre sélectifs (2, 3) comprennent une zone non revêtue (5, 6) pour améliorer la pénétration d'ondes radioélectriques, **caractérisée en ce que** dans un carreau de verre sélectif (2), la zone non revêtue (5) est en forme de treillis et dans d'autres carreaux de verre sélectifs (3), la zone non revêtue (6) est au même endroit que la zone non revêtue en forme de treillis (5) et de la même forme que la zone définie par la zone non revêtue en forme de treillis (5).

2. Fenêtre (1) selon la revendication 1, **caractérisée en ce que** dans d'autres carreaux de verre sélectifs (3), la zone non revêtue (6) est de la même taille que la zone définie par la zone non revêtue en forme de treillis (5).

3. Fenêtre (1) selon la revendication 1 ou 2, **caractérisée en ce que** la zone définie par la zone non revêtue en forme de treillis (5) est de forme carrée ou de forme rectangulaire.

4. Fenêtre (1) selon l'une quelconque des revendications précédentes 1 à 3, **caractérisée en ce que** dans d'autres carreaux de verre sélectifs (3), la zone non revêtue (6) est de forme carrée ou de forme rectangulaire.

5. Fenêtre (1) selon la revendication 1, **caractérisée en ce que** la zone non revêtue en forme de treillis (5) est formée sur le carreau de verre sélectif le plus externe, qui est destinée à être en façade.

6. Fenêtre (1) selon la revendication 1, **caractérisée en ce que** la zone non revêtue en forme de treillis (5) est formée sur le carreau de verre sélectif le plus interne.

7. Fenêtre (1) selon la revendication 1, **caractérisée en ce que** la zone non revêtue en forme de treillis (5) est formée à partir d'éléments non revêtus (7) dont la largeur va jusqu'à 5 mm.

8. Fenêtre (1) selon la revendication 1 ou 7, **caractérisée en ce que** la zone non revêtue en forme de treillis (5) est formée à partir d'éléments non revêtus (7), dont la surface combinée est inférieure ou égale à 30 % de la zone définie par la zone non revêtue en forme de treillis (5).
